# EUROPÄISCHE PATENTSCHRIFT

(11) **EP 0 973 059 B1**
(45) Veröffentlichungstag und Bekanntmachung des Hinweises auf die Patenterteilung: **16.06.2004**
(21) Anmeldenummer: 99112879.4
(22) Anmeldetag: 03.07.1999
(51) Int. Cl.: G03B 9/18, G03B 9/08, H02K 33/18

(54) **Elektromagnetischer Antrieb für einen Schlitzverschluss**
Electromagnetic drive device for focal plane shutter
Dispositif d'entraînement électromagnétique pour un obturateur à rideaux

(30) Priorität: 17.07.1998 DE 19832244
(43) Veröffentlichungstag der Anmeldung: 19.01.2000
(73) Patentinhaber: Rollei Fototechnic GmbH, 38126 Braunschweig (DE)
(72) Erfinder: Mielke, Bodo, 38304 Wolfenbüttel (DE)
(74) Vertreter: Gramm, Werner, Prof. Dipl.-Ing.

(56) Entgegenhaltungen:
- EP-A- 0 498 185
- US-A- 4 051 499
- US-A- 4 596 453
- PATENT ABSTRACTS OF JAPAN vol. 006, no. 082 (P-116), 20. Mai 1982 (1982-05-20) & JP 57 017938 A (CANON INC;OTHERS: 01), 29. Januar 1982 (1982-01-29)

## Beschreibung

Die Erfindung betrifft einen elektromagnetischen Antrieb für einen zwei lichtdichte Verschlußvorhänge aufweisenden Schlitzverschluß einer Kamera, wobei jedem der beiden Verschlußvorhänge ein eigener elektrischer Antriebsmotor zugeordnet ist, der ein aus Permanentmagneten und elektromagnetischen Spulen aufgebauter Linearmotor ist.

Ein derartiger Antrieb ist beispielsweise in der DE 26 16 636 C3 beschrieben. Üblicherweise finden aber in tragbaren Kameras mit Schlitzverschlüssen immer noch Antriebsmechanismen Verwendung, die von mechanischen Vorspanneinrichtungen, wie Federn und dergleichen zur Erzielung der Ablaufbewegung der Verschlußvorhänge angetrieben werden. Derartige Verschlußantriebsmechanismen bekannter Art erfordern eine Spanneinrichtung, die nach Beendigung einer Belichtung die Verschlußvorhänge in die Ausgangsstellung zurückführt und hierbei die Federn spannt, so daß die nächste Belichtung erfolgen kann. Das Erfordernis dieses zusätzlichen Rückstellmechanismus verkompliziert das gesamte Verschlußsystem und erhöht die Anzahl der benötigten Bauteile, wodurch der zur Herstellung und Montage erforderliche Aufwand zusätzlich erhöht wird. Hinzu kommt bei den heutigen motorbetriebenen Kameras üblicherweise eine Motor-Getriebe-Einheit, die ihrerseits die Spanneinrichtung bedient.

Der Erfindung liegt die Aufgabe zugrunde, den Raumbedarf, der innerhalb des Kamerakörpers für den Verschlußantriebsmechanismus mit mechanischem Aufbau vorgesehen ist, für einen elektromagnetischen Antrieb zu nutzen, der einfach und raumsparend aufgebaut und in der Lage ist, die Stellkraft und die nötige Stellgeschwindigkeit des üblichen Drehfederantriebs zu ersetzen.

Diese Aufgabe wird gemäß der Erfindung in Verbindung mit dem eingangs beschriebenen Antrieb durch folgende Merkmale gelöst:
a) Der Linearmotor weist zumindest zwei miteinander fluchtende Permanentmagneten auf, deren sich in einem axialen Abstand gegenüberliegenden Polflächen eine gleichgerichtete Polung aufweisen und zwischen sich eine Weichmagnetscheibe gleicher Außenkontur einschließen;
b) die Permanentmagnete mit der zwischengeschalteten Weichmagnetscheibe sind allseitig von einem Weicheisentopf umschlossen, dessen innere Mantelfläche mit der äußeren Mantelfläche der Permanentmagnete und der Weichmagnetscheibe einen ringförmigen Spalt begrenzt;
c) in dem genannten Spalt ist axial verschiebbar der Spulenkörper gelagert, der zwischen zwei Anschlägen einen Arbeitshub auszuüben vermag und in jeder seiner beiden Endstellungen mit seiner Wicklung die Weichmagnetscheibe übergreift;
d) zur Übertragung der Axialverschiebung des Spulenkörpers auf den zugeordneten Verschlußvorhang ist an dem Spulenkörper ein Antriebselement vorgesehen, das durch eine angepaßte, im Weicheisentopf vorgesehene Öffnung nach außen ragt.

Bei Ausnutzung der Sättigungsinduktion der Weichmagnetscheibe ist in diesem eine mehrfach höhere Induktion erreichbar als im Permanentmagneten selbst. Es wird eine Konzentration und Verdichtung der Magnetfeldlinien erreicht, so daß sich in dem genannten Spalt im Bereich der Weichmagnetscheibe ein hochwirksamer Arbeitsluftspalt ergibt.

Der erfindungsgemäße Antrieb baut sehr kompakt, wobei sich seine innere Baulänge ergibt aus der axialen Breite des Arbeitsluftspaltes, dem Arbeitshub der Spule sowie deren Wanddicken. Eine insgesamt kompakte Bauform ist dann gewährleistet, wenn die Permanentmagnete, die Weichmagnetscheibe sowie-der Weicheisentopf jeweils zylindrisch ausgebildet sind.

Zur Erzielung einer kompakten Bauform trägt ferner bei, wenn die Permanentmagnete Seltene-Erden-Magnete sind. Hierbei ist es wesentlich, daß außerhalb der Magneteinheit keine Beeinträchtigung der Zuverlässigkeit und Funktionsweise der übrigen Teile durch magnetischen Streufluß entsteht. Dies wird durch den das Magnetsystem vollständig umschließenden Weicheisentopf erreicht. Hierdurch wird auch die Montage des Magnetsystems erleichtert, da keine starken Magnetkräfte auf die übrigen Bauteile wirken.

Zur Begrenzung der axialen Baulänge ist es vorteilhaft, wenn die die Axialverschiebung des Spulenkörpers begrenzenden Anschläge jeweils durch die Stirnwandung des Weicheisentopfes gebildet sind.

Um die elektromagnetische Antriebseinheit in ihren Endlagen so zu halten, daß nicht bereits geringfügige Erschütterungen bzw. Stöße zu kleinen Bewegungen der Verschlußvorhänge und somit zu einer unbeabsichtigten Filmbelichtung führen, ist es zweckmäßig, wenn den beiden Anschlägen jeweils eine Magnetrast zugeordnet ist. Hierdurch werden die Verschlußvorhänge von einer definierten Haltekraft im Stillstand festgehalten. Eine im Aufbau einfache Magnetrast wird erfindungsgemäß durch je einen an den beiden axialen Spulenenden in deren Wicklung eingelegten offenen Weicheisenring gebildet. In den beiden Endlagen der Spule wirken abwechselnd die magnetischen Anziehungskräfte im Bereich des genannten Arbeitsspaltes auf die Weicheisenringe, durch deren Drahtdurchmesser die Haltekraft dieser Magnetrast bestimmbar ist.

Zur Optimierung der kompakten Baulänge des Antriebs ist es zweckmäßig, wenn in jeder Anschlagstellung des Spulenkörpers die vom Anschlag entfernt liegende letzte Wicklung der Spule auch die letzte noch im Arbeitsspalt radial außerhalb der Weichmagnetscheibe-liegende Spulenwicklung ist, während,-der hier eingebettete offene Weicheisenring gerade jenseits des genannten Arbeitspaltes liegt.

Zur Erzielung einer höheren Kraftwirkung und einer größeren Arbeitsgeschwindigkeit ist es vorteilhaft, wenn der Linearmotor drei Permanentmagnete mit zwei zwischengeschalteten Weichmagnetscheiben sowie eine Doppelspule umfaßt.

Um den erforderlichen Einbauraum für die beiden Linearmotoren zu minimieren, ist es zweckmäßig, wenn die zwei Linearmotoren für die beiden Verschlußvorhänge axial miteinander fluchtend von einem gemeinsamen Weicheisentopf umschlossen sind. Dabei läßt sich die axiale Baulänge noch dadurch reduzieren, daß die beiden Linearmotoren zusammen eine ungerade Anzahl an Permanentmagneten umfassen, von denen der mittlere Permanentmagnet wirkungsmäßig beiden Linearmotoren zugeordnet ist.

Weitere Merkmale der Erfindung sind Gegenstand der Unteransprüche und werden in Verbindung mit weiteren Vorteilen der Erfindung anhand einiger Ausführungsbeispiele näher erläutert.

In der Zeichnung sind einige als Beispiele dienende Ausführungsformen der Erfindung dargestellt. Es zeigen:
- Figur 1: in Draufsicht einen Schlitzverschluß mit einem durch zwei Linearmotoren gebildeten elektromagnetischen Antrieb;
- Figur 2: einen Linearmotor mit teilweise aufgeschnittenem Weicheisentopf;
- Figur 3: in einer Darstellung gemäß Figur 2 einen Linearmotor in abgewandelter Ausführungsform;
- Figur 4: in einer Darstellung gemäß Figur 3 zwei zu einer Baueinheit kombinierte Linearmotoren;
- Figur 5: in einer Darstellung gemäß Figur 1 einen Schlitzverschluß mit einem elektromagnetischen Antrieb gemäß Figur 4 und
- Figur 6: die Darstellung gemäß Figur 5 in schräger Seitenansicht.

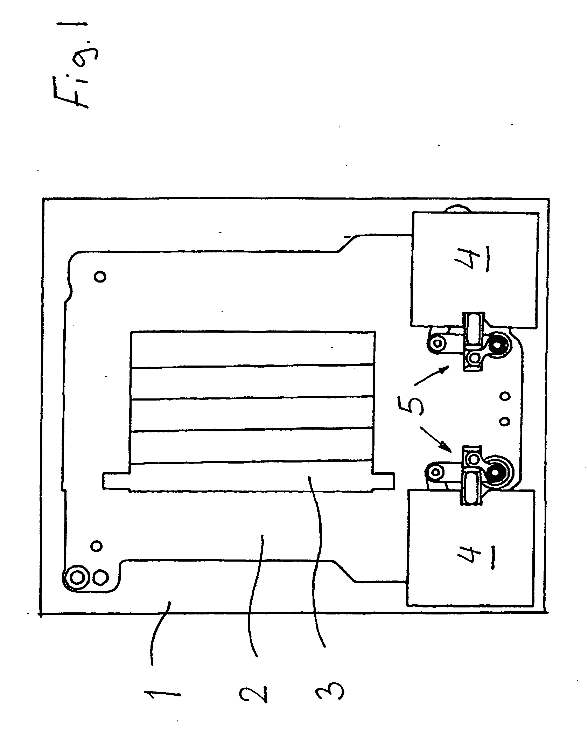

Figur 1 zeigt ein in einem Kameragehäuse 1 angeordnetes Schlitzverschluß-Gehäuse 2 mit zwei lichtdichten Verschlußvorhängen 3, denen jeweils ein Linearmotor 4 als elektromagnetischer Antrieb zugeordnet ist. Die Antriebsübertragungsglieder sind lediglich schematisch als Hebelgestänge 5 angedeutet.

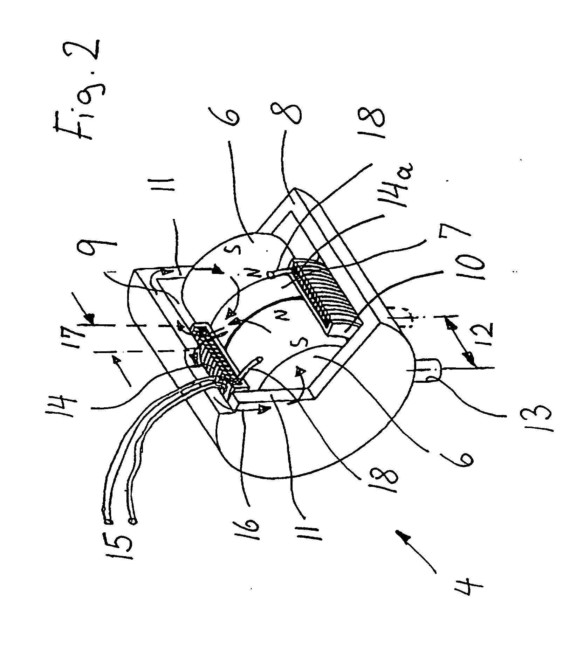

Figur 2 zeigt den Aufbau eines Linearmotors 4. Dieser weist zwei miteinander fluchtende Permanentmagnete 6 auf, deren sich in einem axialen Abstand gegenüberliegenden Polfächen eine gleichgerichtete Polung aufweisen (in dem dargestellten Ausführungsbeispiel jeweils den Nordpol N) und zwischen sich eine weichmagnetscheibe 7 gleicher Außenkontur einschließen. Letztere ist ein massiver Weicheisenzylinder aus Weichmagnetwerkstoff. Die durch Seltene-Erden-Magnete gebildeten Permanentmagnete 6 sind stabförmig und jeweils zylindrisch ausgebildet, wobei die Permanentmagnete 6 sowie die mit ihr verklebte Weichmagnetscheibe 7 gleichen Durchmesser aufweisen.

Die Permanentmagnete 6 mit der zwischengeschalteten Weichmagnetscheibe 7 sind allseitig von einem Weicheisentopf 8 umschlossen, dessen innere Mantelfläche mit der äußeren Mantelfläche der Permanentmagnete 6 und der Weichmagnetscheibe 7 einen ringförmigen Spalt 9 begrenzt. In diesem Spalt 9 ist axial verschiebbar ein Spulenkörper 10 gelagert, der zwischen den als Anschläge 11 wirkenden Stirnwandungen des Weicheisentopfes 8 einen Arbeitshub 12 auszuüben vermag. Für die Übertragung dieses Arbeitshubes 12 auf das Hebelgestänge 5 zur Betätigung eines Verschlußvorhanges 3 ist an dem Spulenkörper 10 als Antriebselement 13 ein Antriebsstift vorgesehen, der durch eine angepaßte, im Weicheisentopf 8 vorgesehene, in der Zeichnung jedoch nicht näher dargestellte Schlitzöffnung nach außen ragt.

Der Spulenkörper 10 umschließt eine Spulenwicklung 14, die einen elektrischen Anschluß 15 aufweist. Der von den Permanentmagneten 6 in die Weichmagnetscheibe 7 und von dieser in den Spalt 9 austretende Magnetfluß ist mit Pfeilen 16 gekennzeichnet. Hierdurch ergibt sich radial außerhalb der Weichmagnetscheibe 7 über deren axiale Länge ein hochwirksamer Arbeitsspalt 17.

Die konstruktive Gestaltung ist so gewählt, daß der Spulenkörper 10 in jeder seiner Stellungen die Weichmagnetscheibe 7 mit gleicher Anzahl von Spulenwicklungen übergreift, so daß sich in dem Arbeitsspalt 17 immer die gleiche Anzahl von Spulenwicklungen befindet. Zur Optimierung der kompakten Baulänge ist es dabei zweckmäßig, wenn in jeder der beiden Anschlagsstellungen des Spulenkörpers 10 die von dem entsprechenden Anschlag 11 entfernt liegende letzte Wicklung 14a der Spule auch die letzte noch im Arbeitsspalt 17 liegende Spulenwicklung ist.

Den beiden Anschlägen 11 ist jeweils eine Magnetrast zugeordnet, die durch je einen an den beiden axialen Spulenenden in deren Wicklung 14 eingelegten offenen Weicheisenring 18 gebildet ist. Dabei ist es ebenfalls zur Optimierung der Baulänge zweckmäßig, wenn in einer Anschlagsstellung des Spulenkörpers 10 der von dem entsprechenden Anschlag 11 entfernt liegende Weicheisenring 18 gerade jenseits des Arbeitsspaltes 17 liegt.

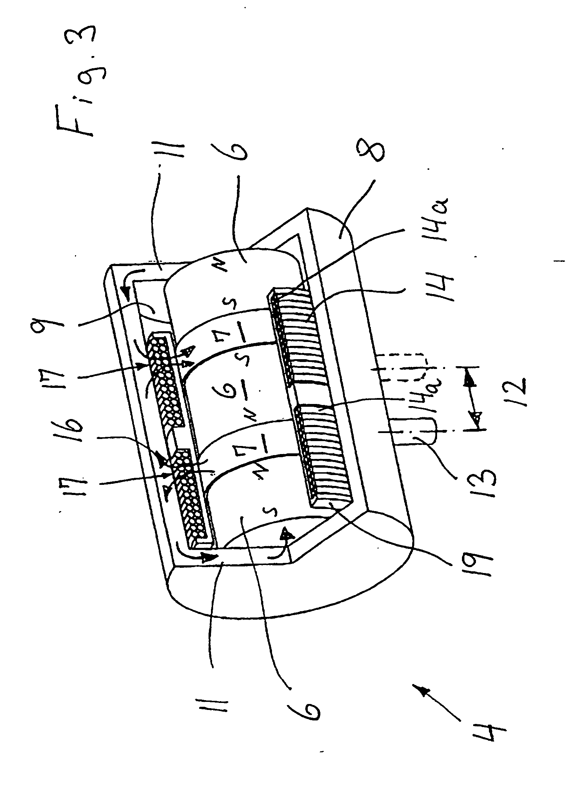

Figur 3 zeigt für den Linearmotor 4 eine abgewandelte Ausführungsform. Hier sind drei Permanentmagnete 6 mit zwei zwischengeschalteten Weichmagnetscheiben 7 sowie eine diese übergreifende Doppelspule 19 vorgesehen. Bei dieser Ausführungsform ergeben sich somit zwei Arbeitsspalte 17 und damit doppelte Kraftwirkung sowie eine gegenüber der Ausführungsform gemäß Figur 2 etwa 1,4-fach schnellere Betätigung. Dabei wird die Verdoppelung der Kraftwirkung mit nur einem zusätzlichen Permanentmagneten und einer zweiten Weichmagnetscheibe erreicht, so daß sich gegenüber der Ausführungsform gemäß Figur 2 keine doppelte Baulänge ergibt.

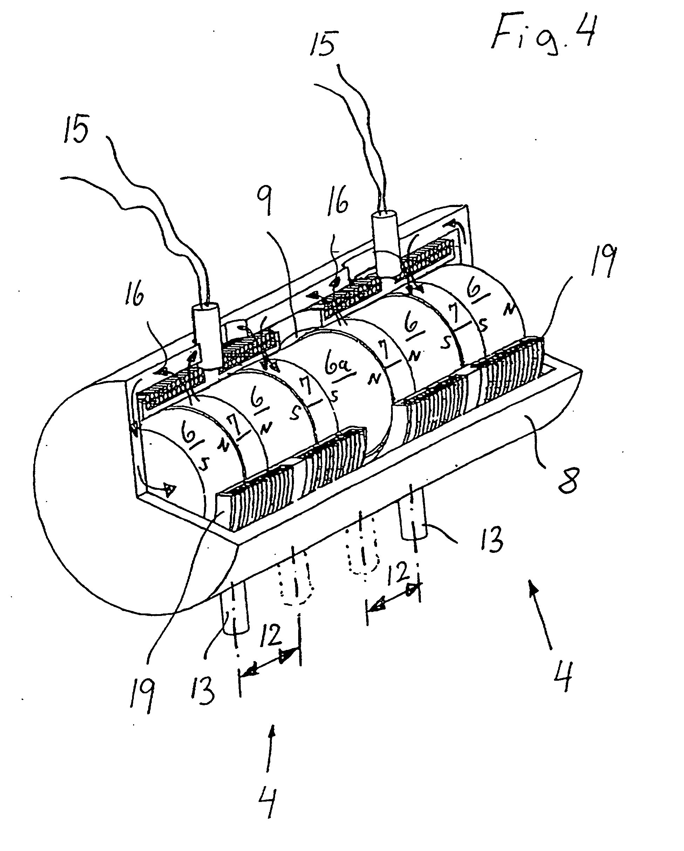

Figur 4 zeigt eine Ausführungsform, bei der die zwei zum Antrieb der beiden Verschlußvorhänge benötigten Linearmotoren 4 axial miteinander fluchtend von einem gemeinsamen Weicheisentopf 8 umschlossen sind. Vom Aufbau her handelt es sich um zwei Linearmotoren gemäß Figur 2 mit einem gemeinsam genutzten mittleren fünften Permanentmagneten 6a und zwei zusätzlichen Weichmagnetscheiben 7. Die Kraftwirkung sowie die Arbeitsgeschwindigkeit jeder der beiden Linearmotore 4 entsprechen etwa denen der Ausführungsform gemäß Figur 3, ohne daß eine Verdoppelung der axialen Baulänge des Linearmotors gemäß Figur 3 in Kauf genommen werden müßte.

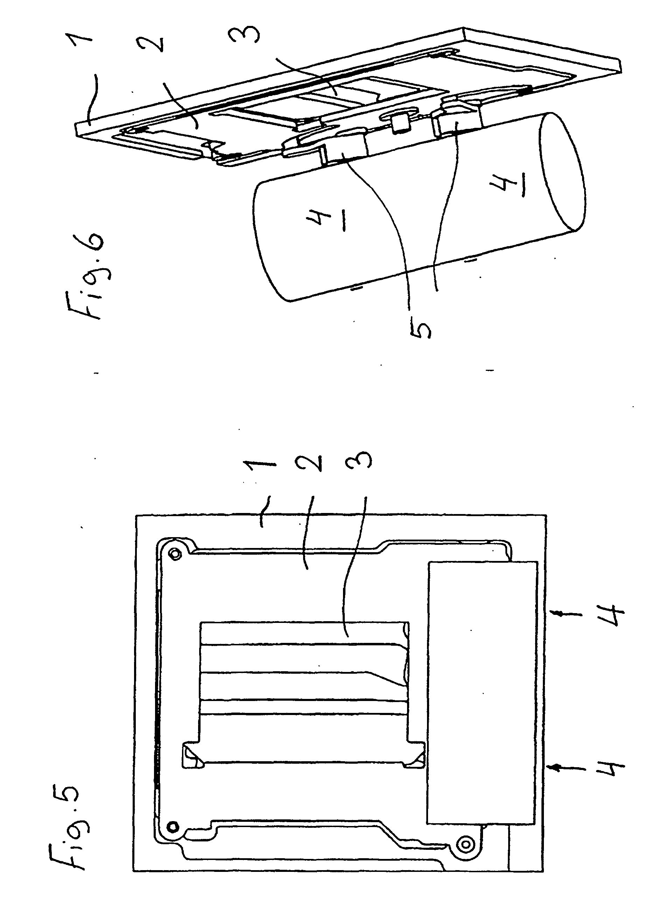

Die Figuren 5 und 6 zeigen den kombinierten Antrieb gemäß Figur 4 montiert auf dem Schlitzverschluß-Gehäuse 2.

## Patentansprüche

1. Elektromagnetischer Antrieb für einen zwei lichtdichte Verschlußvorhänge (3) aufweisenden Schlitzverschluß einer Kamera, wobei jedem der beiden Verschlußvorhänge (3) ein eigener elektrischer Antriebsmotor zugeordnet ist, der ein aus Permanentmagneten (6) und elektromagnetischen Spulen (10, 14) aufgebauter Linearmotor (4) ist, **gekennzeichnet durch** folgende Merkmale:
a) Der Linearmotor (4) weist zumindest zwei miteinander fluchtende Permanentmagneten (6) auf, deren sich in einem axialen Abstand gegenüberliegenden Polflächen eine gleichgerichtete Polung aufweisen und zwischen sich eine Weichmagnetscheibe (7) gleicher Außenkontur einschließen;
b) die Permanentmagnete (6) mit der zwischengeschalteten Weichmagnetscheibe (7) sind allseitig von einem Weicheisentopf (8) umschlossen, dessen innere Mantelfläche mit der äußeren Mantelfläche der Permanentmagnete (6) und der Weichmagnetscheibe (7) einen ringförmigen Spalt (9) begrenzt;
c) in dem genannten Spalt (9) ist axial verschiebbar der Spulenkörper (10) gelagert, der zwischen zwei Anschlägen (11) einen Arbeitshub (12) auszuüben vermag und in jeder seiner beiden Endstellungen mit seiner Wicklung (14) die Weichmagnetscheibe (7) übergreift;
d) zur Übertragung der Axialverschiebung des Spulenkörpers (10) auf den zugeordneten Verschlußvorhang (3) ist an dem Spulenkörper (10) ein Antriebselement (13) vorgesehen, das **durch** eine angepaßte, im Weicheisentopf (8) vorgesehene Öffnung nach außen ragt.

2. Antrieb nach Anspruch 1, **dadurch gekennzeichnet, daß** die Permanentmagnete (6), die Weichmagnetscheibe (7) sowie der Weicheisentopf (8) jeweils zylindrisch ausgebildet sind.

3. Antrieb nach Anspruch 1 oder 2, **dadurch gekennzeichnet, daß** die Permanentmagnete (6) Seltene-Erden-Magnete sind.

4. Antrieb nach Anspruch 1, 2 oder 3, **dadurch gekennzeichnet, daß** die Polflächen der Permanentmagnete (6) mit der Weichmagnetscheibe (7) verklebt sind.

5. Antrieb nach einem der vorhergehenden Ansprüche, **dadurch gekennzeichnet, daß** die die Axialverschiebung des Spulenkörpers (10) begrenzenden Anschläge (11) jeweils durch die Stirnwandung des Weicheisentopfes (8) gebildet sind.

6. Antrieb nach einem der vorhergehenden Ansprüche, **dadurch gekennzeichnet, daß** den beiden Anschlägen (11) jeweils eine Magnetrast zugeordnet ist.

7. Antrieb nach Anspruch 6, **dadurch gekennzeichnet, daß** die Magnetrast durch je einen an den beiden axialen Spulenenden in deren Wicklung (14) eingelegten offenen Weicheisenring (18) gebildet ist.

8. Antrieb nach Anspruch 7, **dadurch gekennzeichnet, daß** in jeder Anschlagstellung des Spulenkörpers (10) die vom Anschlag (11) entfernt liegende letzte Wicklung (14a) der Spule auch die letzte noch im Arbeitsspalt (17) radial auβerhalb der Weichmagnetscheibe (7) liegende Spulenwicklung ist, während der hier eingebettete offene Weicheisenring (18) gerade jenseits des genannten Arbeitspaltes (17) liegt.

9. Antrieb nach einem der vorhergehenden Ansprüche, **dadurch gekennzeichnet, daß** der Linearmotor (4) drei Permanentmagnete (6) mit zwei zwischengeschalteten Weichmagnetscheiben (7) sowie eine Doppelspule (19) umfaßt.

10. Antrieb nach einem der vorhergehenden Ansprüche, **dadurch gekennzeichnet, daß** die zwei Linearmotoren (4) für die beiden Verschlußvorhänge (3) axial miteinander fluchtend von einem gemeinsamen Weicheisentopf (8) umschlossen sind.

11. Antrieb nach Anspruch 10, **dadurch gekennzeichnet, daß** die beiden Linearmotoren (4) zusammen eine ungerade Anzahl an Permanentmagneten (6) umfassen, von denen der mittlere Permanentmagnet (6a) wirkungsmäßig beiden Linearmotoren (4) zugeordnet ist.

## Claims

1. Electromagnetic drive for a focal-plane shutter of a camera having two light-excluding shutter curtains (3), each of the two shutter curtains (3) being assigned an own electric drive motor, which is a linear motor (4) constructed from permanent magnets (6). and electromagnetic coils (10, 14), **characterized by** the following features:
a) the linear motor (4) has at least two mutually aligned permanent magnets (6), the pole faces of which, lying opposite one another at an axial distance, have like polarity and enclose between them a soft-magnetic disc (7) of the same outer contour;
b) the permanent magnets (6) with the soft-magnetic disc (7) interposed are enclosed on all sides by a soft-iron pot (8), the inner lateral surface of which bounds with the outer lateral surface of the permanent magnets (6) and of the soft-magnetic disc (7) an annular gap (9);
c) mounted in said gap (9) in an axially displaceable manner is the coil former (10), which is able to exert an operating stroke (12) between two stops (11) and, in each of its two end positions, reaches with its winding (14) over the soft-magnetic disc (7);
d) for transferring the axial displacement of the coil former (10) to the assigned shutter curtain (3), on the coil former (10) there is provided a drive element (13), which protrudes outwards through an adapted opening provided in the soft-iron pot (8).

2. Drive according to Claim 1, **characterized in that** the permanent magnets (6), the soft-magnetic disc (7) and the soft-iron pot (8) are in each case of a cylindrical design.

3. Drive according to Claim 1 or 2, **characterized in that** the permanent magnets (6) are rare-earth magnets.

4. Drive according to Claim 1, 2 or 3, **characterized in that** the pole faces of the permanent magnets (6) are adhesively bonded to the soft-magnetic disk (7).

5. Drive according to one of the preceding claims, **characterized in that** the stops (11) limiting the axial displacement of the coil former (10) are respectively formed by the end wall of the soft-iron pot (8).

6. Drive according to one of the preceding claims, **characterized in that** the two stops (11) are in each case assigned a magnetic detent.

7. Drive according to Claim 6, **characterized in that** the magnetic detent is formed by a respective open soft-iron ring (18) placed on the two axial coil ends, in their winding (14).

8. Drive according to Claim 7, **characterized in that**, in each stop position of the coil former (10), the last winding (14a) of the coil, remote from the stop (11), is also the last coil winding still lying in the working gap (17) radially outside the soft-magnetic disk (7), while the open soft-iron ring (18) embedded here lies just beyond said working gap (17).

9. Drive according to one of the preceding claims, **characterized in that** the linear motor (4) comprises three permanent magnets (6), with two soft-magnetic discs (7) interposed, as well as a double coil (19).

10. Drive according to one of the preceding claims, **characterized in that** the two linear motors (4) for the two shutter curtains (3) are enclosed axially in line with one another by a common soft-iron pot (8).

11. Drive according to Claim 10, **characterized in that** the two linear motors (4) together comprise an odd number of permanent magnets (6), of which the middle permanent magnet (6a) is operatively assigned to both linear motors (4).

## Revendications

1. Dispositif d'entraînement électromagnétique pour obturateur à rideaux présentant deux rideaux obturateurs (3) étanches à la lumière, dans un appareil photographique, un moteur d'entraînement électrique propre étant associé à chacun des deux rideaux obturateurs (3), ce moteur étant un moteur linéaire (4) constitué d'aimants permanents (6) et de bobines électromagnétiques (10, 14), **caractérisé par** les particularités suivantes :
a) le moteur linéaire (4) comprend au moins deux aimants permanents (6) mutuellement alignés, dont des surfaces polaires se faisant face à une distance axiale présentent une même polarité et reçoivent entre elles une galette magnétique douce (7) de même contour extérieur ;
b) les aimants permanents (6) avec la galette magnétique douce (7) qui y est intercalée sont enfermés de toutes parts par un pot en fer doux (8) dont la surface latérale intérieure délimite un entrefer annulaire (9) avec la surface latérale extérieure des aimants permanents (6) et de la galette magnétique douce (7) ;
c) le corps de bobine (10) est supporté pour coulisser axialement dans ledit entrefer (9) et peut accomplir une course de travail (12) entre deux butées (11), et son enroulement (14) chevauche la galette magnétique douce (7) dans chacune des deux positions extrêmes du corps de bobine ;
d) pour la transmission du coulissement axial du corps de bobine (10) au rideau obturateur associé (3), il est prévu sur le corps de bobine (10) un élément d'entraînement (13) qui dépasse à l'extérieur par une ouverture adaptée prévue dans le pot en fer doux.

2. Dispositif d'entraînement selon la revendication 1, **caractérisé en ce que** les aimants permanents (6), la galette magnétique douce (7) ainsi que le pot en fer doux (8) sont chacun réalisés cylindriques.

3. Dispositif d'entraînement selon la revendication 1 ou 2, **caractérisé en ce que** les aimants permanents (6) sont des aimants en terres rares.

4. Dispositif d'entraînement selon la revendication 1, 2 ou 3, **caractérisé en ce que** les faces polaires des aimants permanents (6) sont collées à la galette magnétique douce (7).

5. Dispositif d'entraînement selon l'une des revendications précédentes, **caractérisé en ce que** les butées (11) délimitant le coulissement axial du corps de bobine (10) sont chacune constituées par la paroi d'extrémité du pot en fer doux (8).

6. Dispositif d'entraînement selon l'une des revendications précédentes, **caractérisé en ce qu'**une retenue magnétique est associée à chacune des deux butées (11).

7. Dispositif d'entraînement selon la revendication 6, **caractérisé en ce que** la retenue magnétique est formée par un anneau en fer doux (18) ouvert, inséré dans chacune des deux extrémités axiales de bobine, dans son enroulement (14).

8. Dispositif d'entraînement selon la revendication 7, **caractérisé en ce que** dans chaque position de butée du corps de bobine (10), le dernier enroulement (14a) de la bobine situé à distance de la butée (11) est également le dernier qui se trouve encore dans l'entrefer de travail (17) radialement à l'extérieur de la galette magnétique douce (7), tandis que l'anneau en fer doux ouvert (18) qui y est encastré se trouve juste au-delà dudit entrefer de travail (17).

9. Dispositif d'entraînement selon l'une des revendications précédentes, **caractérisé en ce que** le moteur linéaire (4) comprend trois aimants permanents (6) avec deux galettes magnétiques douces intercalées (7), ainsi qu'une double bobine (19).

10. Dispositif d'entraînement selon l'une des revendications précédentes, **caractérisé en ce que** les deux moteurs linéaires (4) pour les deux rideaux obturateurs (3) sont enfermés dans un pot en fer doux commun (8), en étant axialement alignés l'un avec l'autre.

11. Dispositif d'entraînement selon la revendication 10, **caractérisé en ce que** les deux moteurs linéaires (14) comprennent ensemble un nombre impair d'aimants permanents (6), dont l'aimant permanent central (6a) est associé fonctionnellement aux deux moteurs linéaires (4).
